# EUROPEAN PATENT APPLICATION

(11) **EP 4 835 807 A1**
(43) Date of publication of application: **04.11.2026**
(21) Application number: 25173318.4
(22) Date of filing: 29.04.2025
(51) Int. Cl.: G06T 7/00, G06T 7/70, G06T 11/00, G06V 10/772

(54) **SYSTEM AND METHOD FOR SYNTHESIZING IMAGES CONTAINING PATHOLOGIES FOR TRAINING DISCRIMINATIVE PREDICTION ALGORITHM**

(71) Applicant: Koninklijke Philips N.V., 5656 AE Eindhoven (NL)
(72) Inventor: LI, Ye, Eindhoven (NL); CHEN, Alvin, Eindhoven (NL); CHOU, Yu-Cheng, 5656AG Eindhoven (NL); CHEN, Li, Eindhoven (NL)
(74) Representative: Philips Intellectual Property & Standards

(57) **Abstract**

A method is provided for synthesizing images containing pathologies for training a discriminative prediction algorithm for performing pathology detection and diagnosis. The method includes randomly sampling a negative image showing no pathology; identifying a location of an anatomical landmark in the negative image; determining a desired location for placing a pathology to be simulated in the negative image based on the anatomical landmark; generating a binary mask image based on the desired location for the pathology, the binary mask image including a basic structure of the pathology to be simulated at the desired location; selecting an image pair including the negative image with a masked out area and the binary mask image; and generating a synthesized image based on the image pair, where the synthesized image includes a synthesized background corresponding to the negative image and a synthesized foreground corresponding to the basic structure of the pathology to be simulated.

## Description

### FIELD OF THE INVENTION

The invention relates to the field of medical imaging, and more specifically to synthesizing images containing pathologies for training discriminative prediction algorithms.

### BACKGROUND OF THE INVENTION

Artificial intelligence (AI) technology has been progressively integrated into ultrasound imaging. Developing reliable AI software for computer-aided detection (CAD) requires training on diverse and representative training data, which is often challenging due to data imbalance, limited annotations, and low prevalence of positive (pathological) cases. Data annotation is particularly expensive and time-consuming in ultrasound imaging, often requiring video-level and frame-by-frame labeling by clinical experts. For example, data collection typically involves enrolling hundreds or thousands of patients, and may be especially challenging when prevalence of the condition is low (such as in rare diseases). As a result, CAD may exhibit reduced accuracy in underrepresented subgroups. Furthermore, they may lack quality assurance mechanisms to detect inaccuracies after deployment.

For example, to train an AI-based CAD model for detecting lung consolidation (pneumonia) in ultrasound images, approximately 1,000 ultrasound cine-loops showing lungs containing consolidation are required at a minimum. Since positivity rate for lung consolidation is only around 10 percent, over 10,000 cine-loops from at least 500 patients suspected of having pneumonia are needed to obtain this minimum. Extending the model to the pediatric population requires another 10,000 loops from at least another 500 patients. All data collected must be manually annotated by trained experts at both the video and frame levels. The total cost of data collection and annotation may be over $15M USD, and even higher for model rare diseases. These challenges may also reduce clinical confidence in CAD software. Also, studies have shown that CAD aided prediction models often perform poorly in less represented subgroups.

### SUMMARY OF THE INVENTION

The invention is defined by the independent claims. Advantageous embodiments are provided in the dependent claims.

According to a representative embodiment, a method is provided for synthesizing images containing pathologies for training a discriminative prediction algorithm for performing pathology detection and diagnosis. The method includes randomly sampling a negative image showing no pathology; identifying a location of an anatomical landmark in the negative image; determining a desired location for placing a pathology to be simulated in the negative image based on the identified location of the anatomical landmark; generating a binary mask image based on the desired location of the pathology to be simulated, the binary mask image having the same dimension as the negative image and including a basic structure of the pathology to be simulated at the desired location; selecting an image pair comprising the negative image with a masked out area at the desired location (i.e., an area at the desired location masked out) and the binary mask image showing the basic structure of the pathology to be simulated at the same location as the masked out area in the negative image; and generating a synthesized image based on the image pair, where the synthesized image includes a synthesized background corresponding to the negative image and a synthesized foreground corresponding to the basic structure of the pathology to be simulated in the binary mask image at the masked out area in the negative image. Generating the binary mask image comprises (i) sampling a relative position between the pathology to be simulated and the anatomical landmark using a conditional probability mass function (PMF) to determine the desired location of the pathology to be simulated in the binary mask image, (ii) conditionally sampling the basic structure of the pathology to be simulated based on the sampled relative position using a pathology-anatomy bank, and (iii) placing the sampled basic structure of the pathology to be simulated at the desired location.

In some embodiments, generating the synthesized image comprises encoding the negative image using an encoder of a pre-trained autoencoder to obtain a latent feature map, wherein the latent feature map corresponds to the anatomical landmark in the negative image with the masked out area; rescaling the binary mask image to the same dimension of the latent feature map; using the latent feature map and rescaled binary mask image as conditions to a conditional diffusion model to fill in the masked out area in the latent feature map according to the basic structure of the pathology to be simulated given in the binary mask image to output a processed latent feature map; and decoding the processed latent feature map output by the conditional diffusion model using the decoder of the pre-trained autoencoder to provide the synthesized image.

Preferably, in these embodiments the autoencoder may be pre-trained on a dataset of real clinical images, and the conditional diffusion model may be trained by passing real images through the pre-trained autoencoder to produce down-sampled latent feature maps.

In some embodiments, the method may further comprise randomly sampling real negative images having key anatomical structures, and creating a combined dataset of real negative images and the synthesized image for training the discriminative prediction algorithm by combining the randomly sampled real negative images and the synthesized image.

In such embodiments, the method may further comprise performing test-time augmentation of the combined dataset to alter at least one of size, shape, texture or position of the synthesized pathology in the synthesized image.

Additionally or alternatively in such embodiments, the method may further comprise training the discriminative prediction algorithm using the combined dataset for predicting presence of the pathology in an input image of a patient.

Preferably, training the discriminative prediction algorithm may be performed concurrently with training the autoencoder and the conditional diffusion model through an iterative training process until convergence.

In one of such embodiments, the method may further comprise classifying the input image of the patient as positive, with a pathology, using the discriminative prediction algorithm at inference; and confirming accuracy of the classifying by generating another synthesized image similar to the input image using the conditional diffusion model, inputting the another synthesized image to the discriminative prediction algorithm, and confirming the accuracy of the classifying when the discriminative prediction algorithm classifies the another synthesized image as positive.

In another of such embodiments, the method may further comprise classifying the input image using the discriminative prediction algorithm at inference to provide a diagnostic result; generating another synthesized image similar to the input image in real-time; inputting the another synthesized image to the discriminative prediction algorithm; classifying the another synthesized image using the discriminative prediction algorithm; and confirming the diagnostic result based on the classifying of the another synthesized image using the discriminative prediction algorithm.

In some embodiments, the location of the anatomical landmark and the desired location in the negative image may each be provided by bounding box coordinates.

In some embodiments, the method may further comprise comprising previously building the anatomy-pathology bank, wherein building the anatomy-pathology bank comprises: receiving a plurality of pathology-present images showing corresponding pathologies, respectively; cropping each pathology-present image of the plurality of pathology-present images to a smaller pathology region of interest (ROI) encompassing the corresponding pathology; extracting the basic structure of the pathology to be simulated by performing on the pathology ROI at least one of (i) binary thresholding to increase contrast of the pathology, (ii) edge detection or edge enhancement to highlight structural boundaries, (iii) feature extraction to identify shape and texture features, or (iv) object detection to extract local feature maps; and storing the extracted basic structures in the anatomy-pathology bank.

According to another representative embodiment, a system is provided for synthesizing images containing pathologies for training a discriminative prediction algorithm for performing pathology detection and diagnosis. The system includes a processing unit, a pathology-anatomy bank storing extracted basic structures of pathologies, and a non-transitory memory. The memory stores instructions that, when executed, cause the processing unit to randomly sample a negative image showing no pathology; identify a location of an anatomical landmark in the negative image; determine a desired location for placing a pathology to be simulated in the negative image based on the identified location of the anatomical landmark; generate a binary mask image based on the desired location of the pathology to be simulated, the binary mask image having the same dimension as the negative image and including a basic structure of the pathology to be simulated at the desired location, wherein generating the binary mask image includes (i) sampling a relative position between the pathology to be simulated and the anatomical landmark using a conditional PMF to determine the desired location of the pathology to be simulated in the binary mask image, (ii) conditionally sampling the basic structure of the pathology to be simulated based on the sampled relative position using the pathology-anatomy bank, and (iii) placing the sampled basic structure of the pathology to be simulated at the desired location; select an image pair comprising the negative image with a masked out area at the desired location and the binary mask image showing the basic structure of the pathology to be simulated at the same location as the masked out area in the negative image; and generate a synthesized image based on the image pair, wherein the synthesized image comprises a synthesized background corresponding to the negative image and a synthesized foreground corresponding to the basic structure of the pathology to be simulated in the binary mask image at the masked out area in the negative image.

In some embodiments, execution of the instructions cause the processing unit of the system to generate the synthesized image by: encoding the negative image using an encoder of a pre-trained autoencoder to obtain a latent feature map, wherein the latent feature map corresponds to the anatomical landmark in the negative image with the masked out area; rescaling the binary mask image to the same dimension of the latent feature map; using the latent feature map and rescaled binary mask image as conditions to a conditional diffusion model to fill in the masked out area in the latent feature map according to the basic structure of the pathology to be simulated given in the binary mask image to output a processed latent feature map; and decoding the processed latent feature map output by the conditional diffusion model using the decoder of the pre-trained autoencoder to provide the synthesized image.

Preferably, in these embodiments the autoencoder may be pre-trained on a dataset of real clinical images, and the conditional diffusion model may be trained by passing real images through the pre-trained autoencoder to produce down-sampled latent feature maps.

In some embodiments, execution of the instructions may further cause the processing unit of the system to randomly sample real negative images having key anatomical structures, and create a combined dataset of real negative images and the synthesized image for training the discriminative prediction algorithm by combining the randomly sampled real negative images and the synthesized image.

In such embodiments, execution of the instructions may further cause the processing unit of the system to perform test-time augmentation of the combined dataset to alter at least one of size, shape, texture or position of the synthesized pathology in the synthesized image.

In some embodiments, the location of the anatomical landmark and the desired location in the negative image may each be provided by bounding box coordinates.

In some embodiments, execution of the instructions may further cause the processing unit of the system to previously build the anatomy-pathology bank, wherein building the anatomy-pathology bank comprises: receiving a plurality of pathology-present images showing corresponding pathologies, respectively; cropping each pathology-present image of the plurality of pathology-present images to a smaller pathology region of interest (ROI) encompassing the corresponding pathology; extracting the basic structure of the pathology to be simulated by performing on the pathology ROI at least one of (i) binary thresholding to increase contrast of the pathology, (ii) edge detection or edge enhancement to highlight structural boundaries, (iii) feature extraction to identify shape and texture features, or (iv) object detection to extract local feature maps; and storing the extracted basic structures in the anatomy-pathology bank.

According to embodiments of the present disclosure, execution of the instructions may preferably cause the processing unit of the system to carry out the steps of any of the methods described above.

According to another representative embodiment, a non-transitory computer readable medium stores instructions for synthesizing images containing pathologies for training a discriminative prediction algorithm for performing pathology detection and diagnosis. When executed by a processing unit, the instructions cause the processing unit to randomly sample a negative image showing no pathology; identify a location of an anatomical landmark in the negative image; determine a desired location for placing a pathology to be simulated in the negative image based on the identified location of the anatomical landmark; generate a binary mask image based on the desired location of the pathology to be simulated, the binary mask image having the same dimension as the negative image and including a basic structure of the pathology to be simulated at the desired location, wherein generating the binary mask image comprises (i) sampling a relative position between the pathology to be simulated and the anatomical landmark using a conditional PMF to determine the desired location of the pathology to be simulated in the binary mask image, (ii) conditionally sampling the basic structure of the pathology to be simulated based on the sampled relative position using a pathology-anatomy bank, and (iii) placing the sampled basic structure of the pathology to be simulated at the desired location; select an image pair comprising the negative image with a masked out area at the desired location and the binary mask image showing the basic structure of the pathology to be simulated at the same location as the masked out area in the negative image; and generate a synthesized image based on the image pair, wherein the synthesized image comprises a synthesized background corresponding to the negative image and a synthesized foreground corresponding to the basic structure of the pathology to be simulated in the binary mask image at the masked out area in the negative image.

In some embodiments, execution of the instructions cause the processing unit to generate the synthesized image by: encoding the negative image using an encoder of a pre-trained autoencoder to obtain a latent feature map, wherein the latent feature map corresponds to the anatomical landmark in the negative image with the masked out area; rescaling the binary mask image to the same dimension of the latent feature map; using the latent feature map and rescaled binary mask image as conditions to a conditional diffusion model to fill in the masked out area in the latent feature map according to the basic structure of the pathology to be simulated given in the binary mask image to output a processed latent feature map; and decoding the processed latent feature map output by the conditional diffusion model using the decoder of the pre-trained autoencoder to provide the synthesized image.

According to embodiments of the present disclosure, execution of the instructions stored in the non-transitory computer readable medium stores may preferably cause the processing unit to carry out the steps of any of the methods described above.

### BRIEF DESCRIPTION OF THE DRAWINGS

The example embodiments are best understood from the following detailed description when read with the accompanying drawing figures. It is emphasized that the various features are not necessarily drawn to scale. In fact, the dimensions may be arbitrarily increased or decreased for clarity of discussion. Wherever applicable and practical, like reference numerals refer to like elements.
Fig. 1 is a simplified block diagram of a system for synthesizing images containing pathologies for training a discriminative prediction algorithm, according to a representative embodiment.
Fig. 2 is a simplified functional block diagram showing generative AI framework implemented by generative AI module of the system, according to a representative embodiment.
Fig. 3 is a flow diagram of a method for generating binary mask images including pathologies, according to a representative embodiment.
Fig. 4 provides visual examples of conditional PMFs utilized during inference, according to a representative embodiment.
Fig. 5 provides visual examples of providing ROIs with basic structures of pathologies for the pathology-anatomy bank, according to a representative embodiment.
Fig. 6 provides visual examples of extracting basic structural representation of a pathology from a pathology-present image for the anatomy-pathology bank, according to a representative embodiment.
Fig. 7 is a flow diagram of a method for generating synthesized images including pathologies, according to a representative embodiment.
Fig. 8 is a flow diagram of a method for synthesizing images containing pathologies for training a discriminative prediction algorithm, according to a representative embodiment.

### DETAILED DESCRIPTION OF EMBODIMENTS

Aspects of the disclosure may be supported by various information technology (IT) backends, including either or both local architectures, either as monoliths, networked, or a combination thereof, and hosted architectures, such as a software as a service (SaaS), platform as a service (PaaS), and/or infrastructure as a service (IaaS), or the like. In an example, a supporting infrastructure includes multiple interconnected layers respectively hosting, as an abstraction, various IT processes, services, accounts, and other management components.

Any of the steps described in relation to examples and/or training described below can be performed by a specific-purpose computer system or general-purpose computer system, or a computer-readable medium, or data carrier system configured to carry out any of the steps described previously. The computer system can include a set of software instructions that can be executed to cause the computer system to perform any of the methods or computer-based functions disclosed herein. The computer system may operate as a standalone device or may be connected, for example using a network, to other computer systems or peripheral devices. As an example, a computer system performs logical processing based on digital signals received via an analogue-to-digital converter.

In the following detailed description, for the purposes of explanation and not limitation, representative embodiments disclosing specific details are set forth in order to provide a thorough understanding of an embodiment according to the present teachings. Descriptions of known systems, devices, materials, methods of operation and methods of manufacture may be omitted so as to avoid obscuring the description of the representative embodiments. Nonetheless, systems, devices, materials and methods that are within the purview of one of ordinary skill in the art are within the scope of the present teachings and may be used in accordance with the representative embodiments. It is to be understood that the terminology used herein is for purposes of describing particular embodiments only and is not intended to be limiting. The defined terms are in addition to the technical and scientific meanings of the defined terms as commonly understood and accepted in the technical field of the present teachings.

It will be understood that, although the terms first, second, third, etc. may be used herein to describe various elements or components, these elements or components should not be limited by these terms. These terms are only used to distinguish one element or component from another element or component. Thus, a first element or component discussed below could be termed a second element or component without departing from the teachings of the inventive concept.

The terminology used herein is for purposes of describing particular embodiments only and is not intended to be limiting. As used in the specification and appended claims, the singular forms of terms "a," "an" and "the" are intended to include both singular and plural forms, unless the context clearly dictates otherwise. Additionally, the terms "comprises," "comprising," and/or similar terms specify the presence of stated features, elements, and/or components, but do not preclude the presence or addition of one or more other features, elements, components, and/or groups thereof. As used herein, the term "and/or" includes any and all combinations of one or more of the associated listed items.

Unless otherwise noted, when an element or component is said to be "connected to," "coupled to," or "adjacent to" another element or component, it will be understood that the element or component can be directly connected or coupled to the other element or component, or intervening elements or components may be present. That is, these and similar terms encompass cases where one or more intermediate elements or components may be employed to connect two elements or components. However, when an element or component is said to be "directly connected" to another element or component, this encompasses only cases where the two elements or components are connected to each other without any intermediate or intervening elements or components.

The present disclosure, through one or more of its various aspects, embodiments and/or specific features or sub-components, is thus intended to bring out one or more of the advantages as specifically noted below. For purposes of explanation and not limitation, example embodiments disclosing specific details are set forth in order to provide a thorough understanding of an embodiment according to the present teachings. However, other embodiments consistent with the present disclosure that depart from specific details disclosed herein remain within the scope of the appended claims. Moreover, descriptions of well-known apparatuses and methods may be omitted so as to not obscure the description of the example embodiments. Such methods and apparatuses are within the scope of the present disclosure.

Generally, the various embodiments described herein provide an artificial intelligence (AI) based method and system for integrating a generative AI framework into a CAD system in order to synthesize realistic pathological images for training AI discriminative prediction algorithms (models) downstream from the AI framework. The generative AI framework improves reliability of the discriminative prediction algorithms by increasing data diversity and positive case prevalence in training data sets, and may further serve as a quality control mechanism allowing clinicians to inspect synthesized images and verify downstream prediction results, as discussed below. Unlike generative AI techniques that rely on unconstrained image synthesis, the embodiments described herein use real positive (pathology) and negative (anatomy) image pairs as inputs to ensure that synthesized pathologies exhibit realistic location, size, shape, and structure.

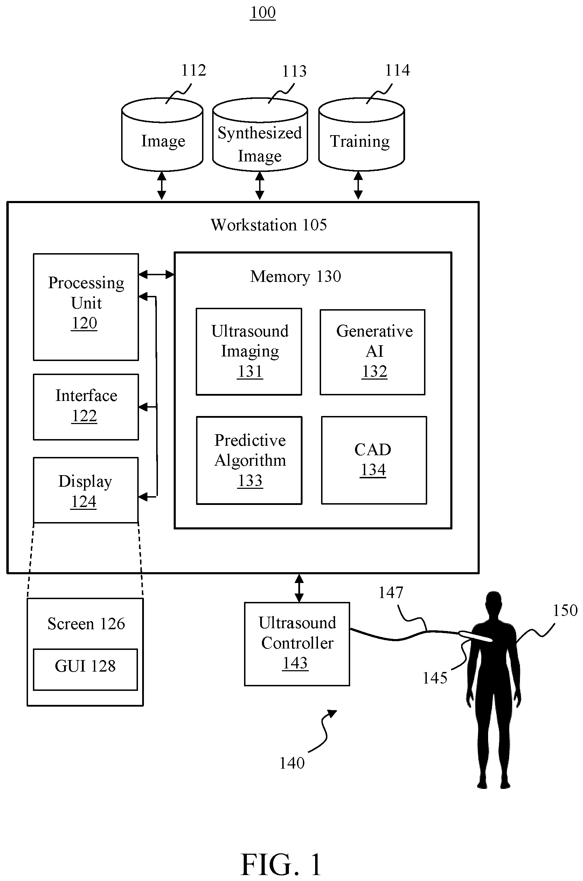

Fig. 1 is a simplified block diagram of a system for synthesizing images containing pathologies for training a discriminative prediction algorithm for performing pathology detection and diagnosis, according to a representative embodiment.

Referring to Fig. 1, system 100 includes a workstation 105 for implementing and/or managing the processes described herein with regard to synthesizing images containing pathologies for enhancing training of AI models. The synthesized images may be synthesized ultrasound images, for example, to be used to train discriminative predictive algorithms for performing and analyzing ultrasound imaging, for example. However, synthesized images may be other types medical images, such as x-ray imaging, computed tomography (CT) scans, magnetic resonance (MR) imaging, or positron emission tomography (PET) scans, for example, without departing from the scope of the present teachings.

The workstation 105 includes one or more processors indicated by processing unit 120, one or more memories indicated by memory 130, a user interface 122 and a display 124. The processing unit 120 communicates with representative ultrasound imaging system 140 through an imaging interface (not shown). The ultrasound imaging system 140 includes an ultrasound controller 143 and an ultrasound probe 145 operable by an operator to obtain ultrasound images of various anatomies of a subject (patient) 150. The ultrasound probe 145 may be manipulated manually by the ultrasound user, automatically by a robot under control of a robot controller (not shown), or a combination of both.

The ultrasound probe 145 may include a 1D/2D matrix array of transducer elements, capable of scanning in two or three dimensions, for example, for emitting ultrasound waves into the body of the subject 150 and receiving echo signals in response. The transducer elements may include capacitive micromachined ultrasonic transducers (CMUTs) or piezoelectric transducers formed of materials such as lead zirconate titanate (PZT) or polyvinylidene difluoride (PVDF), for example, although other types of transducer material may be incorporated without departing from the scope of the present teachings. The transducer array may be coupled to a microbeamformer in the ultrasound probe 145, which controls transmission and reception of signals by the transducer elements.

The ultrasound probe 145 is connected to the ultrasound controller 143 via a probe cable 147. The ultrasound controller 143 is configured to control the ultrasound imaging process, and includes known elements for performing ultrasound imaging, such as a transmit/receive (T/R) switch configured to switch between transmission and reception modes, and a main beamformer configured to provide final beamforming. One of the functions performed by the ultrasound controller 143 is the direction in which beams are steered and focused. Generally, the transmitting of ultrasound signals and the receiving and processing of echo signals in response are known, and therefore additional detail in this regard is not included herein. In various embodiments, all or part of the functionality of the ultrasound controller 143 may be implemented by the processing unit 120.

The memory 130 stores instructions executable by the processing unit 120. When executed, the instructions cause the processing unit 120 to implement one or more processes for synthesizing training images, training a discriminative predictive algorithm using the synthesized training images, and executing the trained discriminative predictive algorithm to analyze ultrasound images acquired by the ultrasound imaging system 140, including automated pathology detection and diagnosis. The ultrasound images may be provided from the ultrasound imaging system 140 in real-time or near real-time during a scanning procedure, or may be retrieved from storage following the scanning procedure. For purposes of illustration, the memory 130 is shown to include software modules, each of which includes the instructions, executable by the processing unit 120, corresponding to an associated capability of the system 100, as discussed below.

The processing unit 120 is representative of one or more processing devices, and may be implemented by a general purpose computer, a central processing unit (CPU), a digital signal processor (DSP), a graphical processing unit, a computer processor, a microprocessor, a state machine, programmable logic device, field programmable gate arrays (FPGAs), application specific integrated circuits (ASICs), or combinations thereof, using any combination of hardware, software, firmware, hardwired logic circuits, or combinations thereof. Any processor or processing unit herein may include multiple processors, parallel processors, or both. Multiple processors may be included in, or coupled to, a single device or multiple devices. The term "processor" as used herein encompasses an electronic component able to execute a program or machine executable instruction. A processor may also refer to a collection of processors within a single computer system or distributed among multiple computer systems, such as in a cloud-based or other multi-site application. Programs have software instructions performed by one or multiple processors that may be within the same computing device or which may be distributed across multiple computing devices.

The memory 130 may include main memory and/or static memory, where such memories may communicate with each other and the processing unit 120 via one or more buses. The memory 130 may be implemented by any number, type and combination of random access memory (RAM) and read-only memory (ROM), for example, and may store various types of information, such as software algorithms, AI machine learning models, and computer programs, all of which are executable by the processing unit 120. The various types of ROM and RAM may include any number, type and combination of computer readable storage media, such as a disk drive, flash memory, an electrically programmable read-only memory (EPROM), an electrically erasable and programmable read only memory (EEPROM), registers, a hard disk, a removable disk, tape, compact disk read only memory (CD-ROM), digital versatile disk (DVD), floppy disk, Blu-ray disk, a universal serial bus (USB) drive, or any other form of storage medium. The memory 130 is a tangible storage medium for storing data and executable software instructions, and is non-transitory during the time software instructions are stored therein. As used herein, the term "non-transitory" is to be interpreted not as an eternal characteristic of a state, but as a characteristic of a state that will last for a period. The term "non-transitory" specifically disavows fleeting characteristics such as characteristics of a carrier wave or signal or other forms that exist only transitorily in any place at any time. The memory 130 may store software instructions and/or computer readable code that enable performance of various functions. The memory 130 may be secure and/or encrypted, or unsecure and/or unencrypted.

The system 100 may also include databases for storing information that may be used by the various software modules of the memory 130. Representative databases may include an image database 112 for storing images from current and previous examinations of subjects, a synthesized image database 113 for storing synthesized images generated by the generative framework, and a training database 114 for storing training images for training the generative AI framework, as discussed below. For example, the image database 112 may include image data from previously obtained ultrasound images of various subjects, including negative images without pathologies and positive image with at least one pathology. Each of the image database 112, the synthesized image database 113 and the training database 114 may be implemented by any number, type and combination of RAM and ROM, for example, as discussed above with regard to the memory 130. The databases comprise tangible storage mediums for storing data and executable software instructions and is non-transitory during the time data and software instructions are stored therein. The databases may be secure and/or encrypted, or unsecure and/or unencrypted. For purposes of illustration, the image database 112, the synthesized image database 113 and the training database 114 are shown as separate storage media, although it is understood that all or some of the databases may be combined with one another and/or included in the memory 130, without departing from the scope of the present teachings.

The processing unit 120 may include or have access to an AI engine, which may be implemented as software that provides artificial intelligence (e.g., deep learning, neutral network models) and applies machine learning described herein. The AI engine may reside in any of various components in addition to or other than the processing unit 120, such as the memory 130, an external server, and/or the cloud, for example. When the AI engine is implemented in a cloud, such as at a data center, for example, the AI engine may be connected to the processing unit 120 via the internet or other communication network using one or more wired and/or wireless connection(s). In various embodiments, all or part of the processes provided by machine learning models and algorithms discussed herein may be implemented by the AI engine, for example. The training and execution of the machine learning models and algorithms cannot practically be performed in the human mind.

The user interface 122 is configured to provide information and data output by the processing unit 120, the memory 130 and/or the ultrasound imaging system 140 to the user and/or for receiving information and data input by the user. That is, the user interface 122 enables the user to enter data and to control or manipulate aspects of the processes described herein, and also enables the processing unit 120 to indicate the effects of the user's input, which may include control or manipulation of the ultrasound probe 145 by the user. All or a portion of the user interface 122 may be implemented by a graphical user interface (GUI), such as GUI 128 viewable on the display 124. The user interface 122 may include one or more interface devices, such as a mouse, a keyboard, a trackball, a joystick, a microphone, a video camera, a touchpad, a touchscreen, voice or gesture recognition captured by a microphone or video camera, for example.

The display 124 may be a monitor such as a computer monitor, a television, a liquid crystal display (LCD), an organic light emitting diode (OLED), a flat panel display, a solid-state display, or a cathode ray tube (CRT) display, or an electronic whiteboard, for example. The display 124 includes a screen 126 for viewing ultrasound images of the subject 150, along with various features described herein to communicate to the user the degree of image degradation, if any, as well as the GUI 128 to enable the user to interact with the displayed images and features. In an embodiment, the ultrasound imaging system 140 may include a separate dedicated display for acquiring the ultrasound images, where dedicated display is also represented by the display 124.

Referring to the memory 130, the various modules store sets of data and instructions executable by the processing unit 120 to synthesize images containing pathologies for training a discriminative prediction algorithm, and to execute the trained discriminative prediction algorithm. In the depicted illustrative embodiment, the memory includes ultrasound imaging module 131, which is configured to receive and process ultrasound images acquired by the ultrasound probe 145 of the ultrasound imaging system 140 to provide corresponding ultrasound image data. The ultrasound images are obtained by the user during corresponding ultrasound examinations, e.g., of the subject 150. The ultrasound images may be received in real-time or near real-time from the ultrasound imaging system 140, e.g., during a contemporaneous imaging session of the subject 150. The ultrasound images are displayed on the display 124, enabling the user to visualize the anatomy of the subject 150 while performing sweeps using the ultrasound probe 145. Alternatively, or in addition, the ultrasound images may be previously acquired images, obtained during a previous imaging session of the subject 150 and retrieved from storage (e.g., image database 112). The ultrasound imaging module 131 may also store data associated with the ultrasound images, such as time and date of image acquisition, identification of the ultrasound imaging system 140, and identification of the operator who acquired the ultrasound images using the ultrasound imaging system 140.

The memory 130 further includes generative AI module 132, which is configured to generate synthesized images that include pathologies inserted in negative images of anatomies for purposes of training predictive algorithms. The synthesized images are generated using image pairs, where each image pair includes a negative image with no pathology and a binary mask image showing a pathology to be included in the negative image. Generally, the negative image has a masked out area where the pathology from the binary mask image is to be inserted to create the synthesized training image.

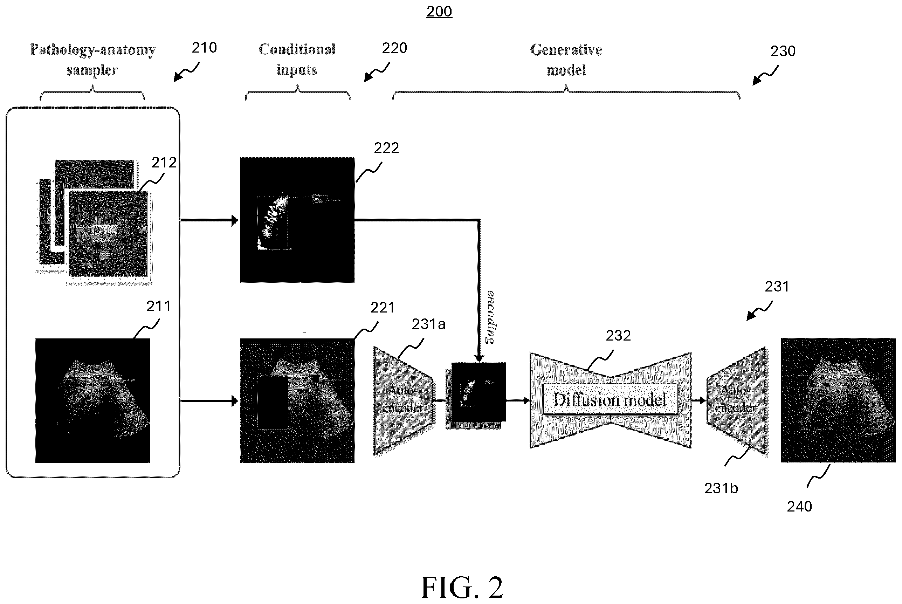

Fig. 2 is a simplified functional block diagram showing generative AI framework implemented by the generative AI module 132, according to a representative embodiment. Referring to Fig. 2, generative AI framework 200 includes pathology-anatomy sampler 210, conditional input 220, and generative model 230, which outputs a synthesized image 240.

The pathology-anatomy sampler 210 is configured to sample pairs of negative images 211 of an anatomy and binary mask images 212 of a pathology to ensure realistic placement of the pathology relative to anatomical landmarks in the negative images 211. The pairing of the negative images 211 and the binary mask images 212 accounts for variations across imaging systems (e.g., including transducers in ultrasound imaging systems) and patient populations. More particularly, the generative AI framework 200 introduces a sampling mechanism that selects pairs of real negative images and real pathologies as conditional inputs, instead of relying on a fully unconstrained image generation process. This conditioning on real examples of pathologies ensures that the pathologies in the synthesized images have realistic appearances and are placed at realistic locations in the negative images.

The pathology-anatomy sampler 210 selects negative and binary mask image pairs to preserve the relative positions of the pathology and the surrounding anatomy, ensuring realistic synthesized image generation. Using ultrasound imaging of lungs as an example, when generating images showing lung consolidation, the pathology is placed directly below the pleural line and between the ribs, reflecting how lung consolidations realistically form in the alveoli. However, for pleural effusions, the pathology appears directly above the pleural line, consistent with how fluid accumulates outside the lung space. The sampling also accounts for variability in ultrasound imaging systems, transducers, scanning orientations, body locations, patient populations, and the like.

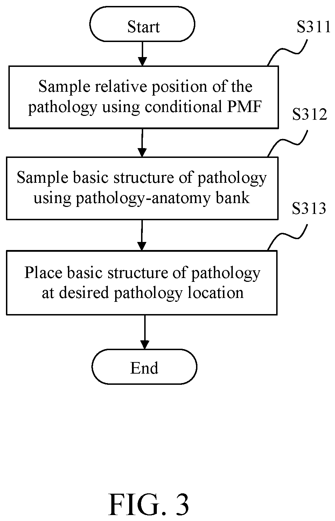

The pathology-anatomy sampler 210 randomly samples negative images and real positive (pathology) images as the binary mask images to pair with the negative images. Fig. 3 is a flow diagram of a method for generating binary mask images including pathologies, according to a representative embodiment. The method may be implemented at least in part using instructions stored in memory 130 and executable by the processing unit 120 in the system 100, for example.

Referring to Fig. 3, in block S311, a relative position between the pathology and the anatomical landmark is sampled by the pathology-anatomy sampler 210 using a conditional probability mass function (PMF) to determine the desired location in the binary mask image. The PMF employed by the pathology-anatomy sampler 210 may have been built by counting occurrences of each event in a real patient dataset. To ensure that the synthesized pathology (foreground) image is positioned appropriately relative to key anatomical landmarks (e.g., the pleural line) in the negative (background) image, the relative position between the pathology and the nearest anatomical landmark is sampled using the conditional PMF, which is specific to each zone of multiple predetermined zones in the subject's body and scanning orientation. Mathematically, the PMF is expressed according to Equation (1): $P \left(\left.ΔX,ΔY\right|X,Y\right) = \frac{P \left(ΔX,ΔX,X,Y\right)}{P \left(X, Y\right)}$ (1)

To construct the conditional PMF, a joint PMF *P*(*ΔX* = Δ*x*, Δ*Y =* Δ*y*, *X = x, Y = y*) is built for capturing the range of possible pathology locations based on empirical data from real, annotated images. The distance of each real pathology to the anatomical landmark is calculated according to Equations (2a) and (2b), where (*x', y*') represents the center of the pathology and (*xᵢ, yᵢ*) represents the center of the anatomical landmark, respectively: $\left(Δ{x}_{i},Δ{y}_{i}\right) = x ′ - {x}_{i} , y ′ - {y}_{i}$ (2a) $\left(Δx, Δy\right) = min \left(\sqrt{Δ {x}_{i}^{2} + Δ {y}_{i}^{2}}\right)$ (2b)

Equations (2a) and (2b) allow for precise modeling of relative positions even when multiple anatomical landmarks are present in the negative image. Then, (Δx, Δy, x, y) are computed for each pathology-anatomy pair.

For each combination of probe type and zone, the joint PMF *P*(*ΔX*, *ΔY*, *X*, *Y*) is constructed by counting occurrences in a 4-dimensional (4D) space (e.g., a 10x10x10x10 grid for a given coordinate system). Next, *P*(*X*, *Y*) is obtained by marginalizing out ΔX and ΔY from the joint PMF. The final conditional PMF *P*(Δ*X*, Δ*Y*|*X, Y*) is then obtained by dividing the joint PMF by *P*(*X*, *Y*), as shown in Equation (1), above.

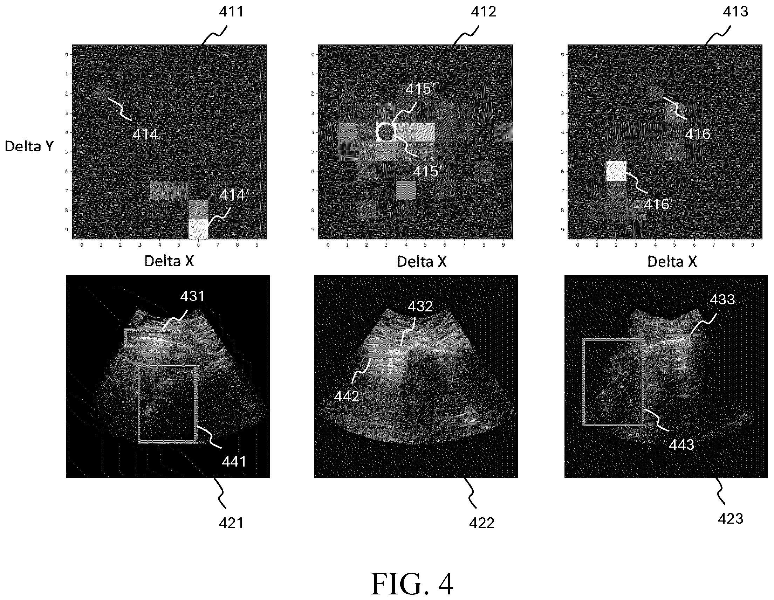

The conditional PMF *P*(*ΔX*, Δ*Y*|*X = x*, *Y = y*) is drawn from to sample pathology positions during inference (image synthesis), where *x* and y represent the specific location of the key anatomical landmark in the negative image. Fig. 4 provides visual examples of conditional PMFs utilized during inference, according to a representative embodiment.

Referring to Fig. 4, visual examples of conditional PMF *P*(Δ*X*, Δ*Y*|*X = x*, *Y = y*) for three different locations of a pleural line are shown. Large dots 414, 415 and 416 indicate locations of the pleural lines in visualization images 411, 412 and 413. That is, the visualization images 411, 412 and 413 indicate built conditional PMF (using real patient datasets) at the specified pleural line locations at dots 414, 415 and 416. The light shaded boxes 414', 415' and 416' indicate locations with higher chances of pathology occurring relative to the anatomical landmarks (pleural lines) at the large dots 414, 415 and 416, respectively, in real patient data. Ultrasound images 421, 422 and 423 correspond to the visualization images 411, 412 and 5413, respectively. In the ultrasound images 421, 422 and 423, boxes 431, 432 and 433 indicate the anatomical landmarks (pleural lines) and boxes 441, 442 and 443 indicate the synthesized pathologies (lung consolidations), respectively.

In block S312 of Fig. 3, the basic structure of the pathology is conditionally sampled based on the sampled relative position using a pathology-anatomy bank. In other words, after identifying the desired location of the synthesized pathology relative to the anatomical landmark, the next step is to select an appropriate pathology of correct size (same dimension as the negative image) and to insert the selected pathology to blend seamlessly with the image background of the negative image at desired location. The pathology may be scaled to accomplish this. The pathology-anatomy bank is constructed to store pathology templates from real patient image data. The pathology templates provide image content with a pathology region-of-interest (ROI) with basic structures of pathologies, and are indexed based on the absolute position of the anatomical landmark within the image and the relative position of the pathology, which are combinations of (*Δx, Δy, x, y*) from real patient image data.

To construct the pathology-anatomy bank, multiple pathology-present images are received showing corresponding pathologies, respectively. The images are pre-processed to provide structural representations of the pathology, which act as "skeletons," by removing low-level texture and allowing for variations during synthesis. The process for creating the skeletons begins by cropping each of the positive images to a smaller pathology ROI encompassing the corresponding pathology. Image pre-processing is then applied to extract the basic pathology structure. Examples of pre-processing techniques include simple binary thresholding of the pathology ROI, performing edge detection or edge enhancement to highlight structural boundaries of the pathology, extracting and/or enhancing human-engineered shape and texture features, and extracting local feature maps from pretrained models, such as an object detector, for example.

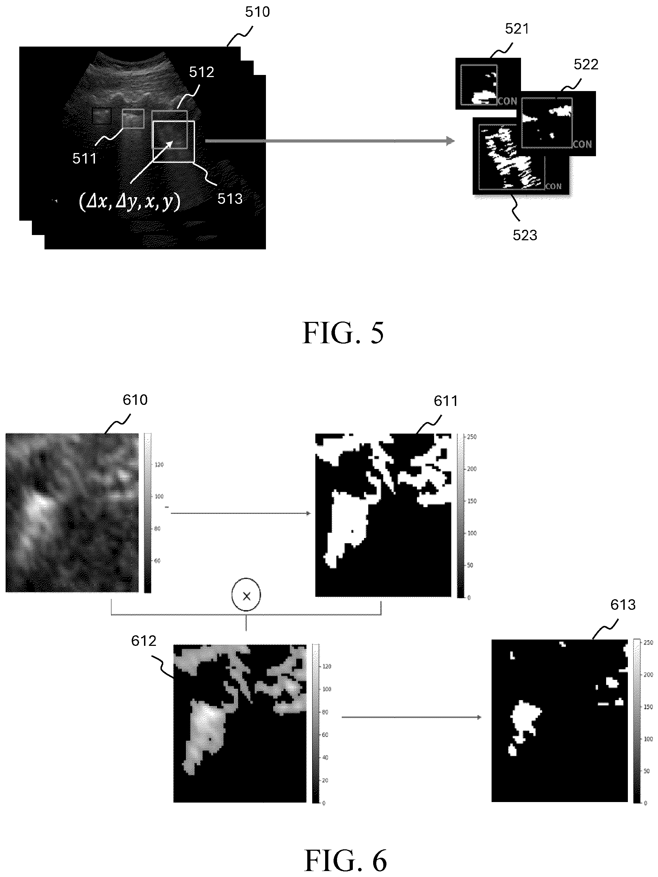

Fig. 5 provides visual examples of providing ROIs with basic structures of pathologies for the pathology-anatomy bank, according to a representative embodiment. Referring to Fig. 5, pathology-present image 510 includes three pathologies in boxes 511, 512 and 513, each of which is located at a corresponding (Δx, Δy, x, y) relative to the anatomical landmark (not shown in Fig. 5). The pathology-present image 510 is pre-processed to crop the pathologies into corresponding pathology ROIs, indicated by boxes 521, 522 and 523, which show basic (low-level) structural representations of the pathologies extracted at the corresponding (Δx, Δy, x, y) locations of the pathology-present image 510. The basic structures may be extracted from the pathology-present image 510 by performing on the corresponding pathology ROI at least one of binary thresholding to increase contrast of the pathology, edge detection or edge enhancement to highlight structural boundaries, feature extraction to identify shape and texture features, or object detection to extract local feature maps. The pathology ROIs with the extracted basic structures are stored in the anatomy-pathology bank.

Fig. 6 provides visual examples of extracting basic structural representation of a pathology (skeleton) from a pathology-present image for the anatomy-pathology bank, according to a representative embodiment. Referring to Fig. 6, progressive image thresholding is performed on pathology-present image 610 for each entry of the anatomy-pathology bank using a traditional thresholding image processing technique, such as Otsu's method, for example, applied over the pathology foreground within an ROI to extract binary segmented image 611. The pathology-present image 610 and the binary segmented image 611 are combined to provide image 612, on which binary segmentation of only non-zero pixels is performed to provide the basic structural representation image 613 ("skeleton"), which may be stored in the pathology-anatomy bank. This approach captures fine-grained local structures in a computationally efficient manner.

During inference of the pathology-anatomy sampler 210, pathology templates (basic structures) are conditionally sampled from the previously constructed pathology-anatomy bank according to the desired relative location of the pathology (Δx, Δy). Mathematically, conditional sampling of the pathology templates may be expressed by Equation (3), wherein *L* is the index of the pathology template: $P \left(\left.L\right|ΔX=Δx,ΔY=Δy,X=x,Y=y\right)$ (3)

As a result, a pathology template is selected from the pathology-anatomy bank as the binary mask image to be paired with the negative image.

Referring again to Fig. 3, in block S313, the sampled basic structure of the pathology from the selected pathology template is placed at the desired location relative to the anatomical landmark. This provides the binary mask image, which has the basic structure of the pathology to be simulated in the desired location. The binary mask image is paired with the negative image, providing a binary mask and negative image pair.

Referring again to Fig. 2, the binary mask and negative image pair is provided as the conditional input 220 to the generative model 230. That is, the conditional input 220 includes the masked negative image 221 with the pathology area at the desired location masked out and the binary mask image 223 showing the basic structure of the pathology at the same location as the masked out area in the negative image 221. The conditional input 220 thus includes the sampled basic structure of the pathology placed in the negative image at the desired location relative to the anatomical landmark. The generative model 230 receives the conditional input 220, and generates a synthesized training image based on the binary mask and negative image pair. The synthesized training image includes a synthesized background corresponding to the negative ultrasound image and a synthesized foreground corresponding to the basic structure of the pathology to be simulated in the binary mask image located in the masked out area of the negative image.

Notably, one method for introducing synthetic pathology into a healthy image involves directly pasting a cropped area of pathology from an original ultrasound image onto the desired location. However, raw images often contain irrelevant information and noise which would cause an obvious boundary artifact. Additionally, this copy-paste approach does not allow for variation in the texture of the synthesized pathology. To address this, the generative model 230 may be conditioned on structural representations of the pathology, which act as skeletons, mentioned above, by removing low-level texture and allowing for variations during synthesis.

In addition to the binary mask and negative image pair provided by the conditional input 220, the inputs to the generative model 230 further include the location of the anatomical landmark for constraining pathology placement, and a desired location specifying where pathology should appear relative to landmark. The location of the anatomical landmark may be provided by bounding box coordinates, for example. Other conditional inputs may be included, such as such as transducer type of the ultrasound transducer and/or the zone type. The inputs are processed through encoding layers before being passed to a diffusion model, as discussed below. The output of the generative model 230 is a realistic, synthesized training image with an anatomical landmark and a pathology at the correct location relative to the anatomical landmark.

As shown, the generative model 230 includes autoencoder 231 and diffusion model 232. The autoencoder 231 includes an encoder 231a and a decoder 231b. The diffusion model 232 may be a conditional diffusion model, meaning that the diffusion model 232 is enhanced by conditioning image synthesis on pathology structure and latent features from the previously trained autoencoder 231. The diffusion model 232 is a type of deep learning model featuring unique training dynamics, data augmentation through noise perturbation, and stepwise refinement process. It leverages a probabilistic approach, according to which an image is iteratively noised and denoised. The stepwise addition and removal of noise allows the diffusion model 232 to learn the underlying data distribution effectively. The conditional aspect of the diffusion model 232 indicates controlling of the diffusion process. The diffusion model 232 may be implemented using Latent Diffusion Model, for example, described by Rombach et al., "High-Resolution Image Synthesis with Latent Diffusion Models" (April 13, 2022). Accordingly, the generative model 230 is able to synthesize realistic pathological regions that blend seamlessly into the surrounding negative image background, while maintaining alignment with key anatomical landmarks. Conditional diffusion models generally outperform generative adversarial networks (GANs), for example, in synthesizing diverse, high-fidelity images. That is, by explicitly modeling the noise, the diffusion model 232 is better at capturing multimodal distributions and generating diverse, high-quality outputs.

Denoting the trained autoencoder 231 as *Dec*(*Enc*(.)) and the diffusion model 232 as D(.), the generative model 230 generates pathologies in a negative image *Î* according to Equation (4): $\hat{I} = Dec \left(D\left(f, S\right)\right)$ (4)

In Equation (4), *f* represents a latent feature map produced by the autoencoder 231 and *S* represents the basic structure of the pathology from the binary mask image. The latent feature map*f* is provided by Equation (5): $f = Enc \left({\hat{I}}_{masked}\right) where {\hat{I}}_{masked} = \left\{\begin{matrix}\hat{I} \left(x, y\right) , & if & \left(x, y\right) ∉ S \\ 0 , & if & \left(x, y\right) ∈ S\end{matrix}\right.$ (5)

In Equation *(5), Î_{masked}* is the pathological bounding box area associated with the basic structure of the pathology S sampled from *P*(*L* | ΔX = Δx, ΔY = Δy, *X = x, Y = y),* discussed above. Here, x and y represent the absolute position of the anatomical landmark, and Δ*x* and Δ*y* represent the center-to-center distance between the pathology and the anatomical landmark. When there are multiple anatomical landmarks, Δ*x* and Δ*y* represent the center-to-center distance between the pathology and the nearest one of the multiple anatomical landmarks. The center (x', y') of the synthesized pathology area is calculated according to Equation (6): $\left(x′,y′\right) = \left(x+Δx,y+Δy\right)$ (6)

The generative model 230 is trained in two phases. In the first training phase, the autoencoder 231 (*Dec*(*Enc*(.))) is trained in an unsupervised fashion on a training dataset of real clinical training images. The training images may be ultrasound images retrieved from the training database 114, for example. The autoencoder 231 is a machine learning model, and may be implemented as a neural network, such as a convolutional neural network (CNN), an artificial neural network (ANN), a recurrent neural network (RNN), a vision transformer, or a U-net model, for example. The machine learning model may be a deep learning model, which refers to neural network with large numbers of layers and parameters that directly enable tasks such as classification and regression, for example, as would be apparent to one skilled in the art. Training the autoencoder 231 includes unsupervised training to learn efficient codings of unlabeled training images. The goal of the autoencoder 231 is to reconstruct an input image, so training the autoencoder 231 includes inputting a target image as the input image, and determining losses that measure similarity of the output reconstructed image and the input target image.

In the second training phase, the diffusion model 232 is trained by passing real images through the pre-trained autoencoder 231 to provide a training dataset of training images, and producing down-sampled latent feature maps *f*. For example, the down-sampled latent feature maps *f* may include an array of 64×64 pixels and 8 channels. The training images may be ultrasound images retrieved from the training database 114, for example. The basic structure of the pathologies S in the training images is also down-sampled, e.g., by a factor of 8, and concatenated channel-wise with the down-sampled latent feature maps *f* to form the final condition feature for the diffusion model 232. The diffusion model 232 is a machine learning model (e.g., a conditional diffusion model), and may be implemented as a neural network, such as a convolutional neural network (CNN), a vision transformer, or a U-net model, for example.

The diffusion model 232 may be trained in a supervised fashion using a training data set including labelled image data from thousands of training images of different anatomical views in different anatomies with and without pathologies, respectively. That is, each training image is labeled to identify anatomies shown in the image, the anatomical view of the anatomy from which the image of the anatomy was acquired, and any pathologies. In any case, the labels may be added by experts in ultrasound imaging, for example, such as radiologist and sonographers, or may be labeled automatically through techniques such as ground truth automation, as would be apparent to one skilled in the art. The labeled image data set may be referred to as ground truth data, and may be stored in the training database 114, for example. During inference, the generative model 230 generates multiple synthesized images to be used for training a discriminative prediction algorithm, discussed below. For ease of explanation, though, the generative model 230 is described with reference to generating a single synthesized image. In addition, the synthesized images generated by the generative model 230 may be combined with randomly sampled healthy real images with key anatomical structures to create a combined dataset of real and synthesized images for training the downstream discriminative prediction algorithms. Data diversity is enhanced through test-time augmentation, which alters the size, shape, texture, and position of the pathologies in the synthesized images. The combined dataset is used to train the downstream discriminative prediction algorithm, discussed below, for task-specific pathology detection. Additionally, the synthesized images may serve as a built-in mechanism for quality assurance, clinical review and patient-specific assessments during deployment, discussed below.

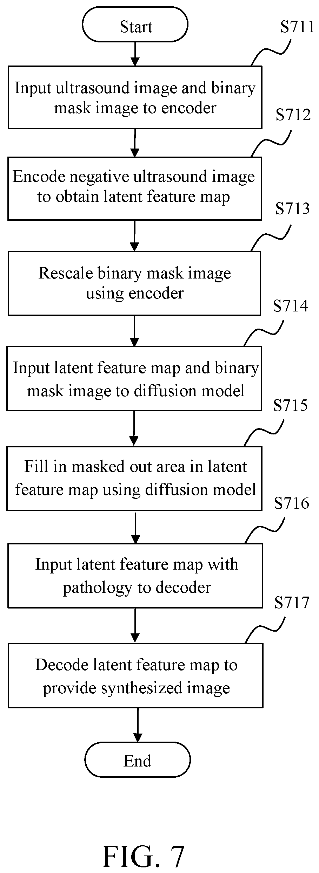

Fig. 7 is a flow diagram of a method for generating synthesized images including pathologies, according to a representative embodiment. The method may be implemented at least in part using instructions stored in memory 130 and executable by the processing unit 120 in the system 100, for example.

Referring to Fig. 7, during inference, the negative ultrasound image and the binary mask image are input to the encoder 231a of the trained autoencoder 231 in block S711. The negative ultrasound image is encoded by the encoder 231a in block S712 to obtain a latent feature map, which corresponds to the anatomical landmark in the negative ultrasound image with the masked out desired pathological area. In block S713, the binary mask image is rescaled by a spatial rescaler to the same dimension as the latent feature map. In block S714, the latent feature map and the rescaled binary mask image are input to the trained diffusion model 232. In block S715, using the latent feature map and rescaled binary mask image as conditions, the diffusion model 232 fills in the masked out area in the latent feature map according to the basic structure of the pathology to be simulated given in the binary mask image to output a processed latent feature map. In block S716, the processed latent feature map output by the diffusion model 232 is input to the decoder 231b of the trained autoencoder 231. In block S717, the processed latent feature map is decoded using the decoder 231b to provide the synthesized image. The synthesized image includes a synthesized background corresponding to the negative image and a synthesized foreground corresponding to the basic structure of the pathology to be simulated in the binary mask image at the masked out area in the negative image. The synthesized image may be included in a training data set including other synthesized training images, as well as real training images. The training data set may be provided to a discriminative algorithm for training purposes, as discussed below.

Referring again to Fig. 1, the memory 130 further includes predictive algorithm module 133, which is configured to train and execute a discriminative predictive algorithm that requires training data (including synthesized images). The discriminative predictive algorithm may be any known task-specific machine learning model for automated pathology detection and diagnosis. The discriminative predictive algorithms have distinguishing capabilities (in their predictions), e.g., ruling out tumors, and may include pathology detection algorithms, segmentation algorithms, classification algorithms, or the like. For example, a frame-level pathology detection algorithm may be used to localize pathology in a subject and derive an overall diagnostic confidence.

The synthesized images output by the generative AI module 132 are used to train the discriminative predictive algorithm. As discussed above, the synthesized images may be combined with real images to form a larger training dataset. The synthesized images and the real images may be labeled by clinical experts (e.g., radiologists, physicians, sonographers) to enable supervised learning by the discriminative predictive algorithm, as would be apparent to one skilled in the art. The distribution of synthesized images may be adjusted by the generative AI module 132 to address imbalances in an original training dataset consisting of real images. For example, when the original training dataset has a higher proportion of small or less severe pathologies compared to large or more severe pathologies, the synthesized images can be designed to include more large or more severe pathologies in proportion to less severe pathologies. This ensures that the combined dataset achieves a balanced ratio (e.g., 50:50) of small and large pathologies. Balancing the data in a training dataset using synthesized images may be applied to various factors, such as system and transducer types, scanning orientations, and scanning locations, for example.

The autoencoder 231 and the diffusion model 232 of the generative model 230 and the downstream discriminative predictive algorithm may be trained sequentially or concurrently. When trained sequentially, the autoencoder 231 and the diffusion model 232 of the generative model 230 are first trained separately, as described above. During inference, the generative model 230 synthesizes images using pathology-anatomy image pairs not seen during training. The discriminative predictive algorithm is then trained using the synthesized images. When trained concurrently, the autoencoder 231 and the diffusion model 232 of the generative model 230 and the downstream discriminative predictive algorithm are trained in parallel through an iterative process. The iterative process includes updating the training of the generative model 230 using negative images and binary mask images, freeze the training of the generative model 230, generate synthesized images using the generative model 230, updating the training of the discriminative predictive algorithm using the synthesized images, monitor performance of the discriminative predictive algorithm do determine effectiveness of the training, and repeat until convergence.

Referring again to Fig. 1, the memory 130 may further include CAD module 134. In an embodiment, the CAD module 134 provides a CAD model, which incorporates both the downstream discriminative predictive algorithm provided by the predictive algorithm module 133 for automatically detecting pathologies in subjects and the generative model 230 for providing feedback. Accordingly, the CAD model provides improved clinical confidence through visual inspection, where the user is able to interactively query the generative model 230 to visually assess quality of the synthesized images generated by the generative model 230 through the user interface 122 and display 124. For example, the user may specify desired conditions for image generation, such as probe type, scanning location, pathology size, and pathology severity, to guide generation of the synthesized images. If the synthesized images generated according to the desired conditions appear realistic, it reinforces the user's confidence in the downstream discriminative prediction algorithms.

Also, the CAD model enables the user to request predictions from the discriminative prediction algorithm that has been trained on the synthesized images. This allows the user to compare their clinical judgment with the predictions by the discriminative prediction algorithm. Agreement between the user and prediction results can increase trust in the reliability of the synthesized images and the discriminative prediction algorithm itself.

The generative model 230 may be used to generate subject-specific synthesized images, conditioning pathologies to be included in the negative images based on real scans from that subject. This allows the user to visualize potential changes in pathology over time (such as worsening or improvement), and to predict the trajectory of disease. Likewise, the generative model 230 may also be queried for training and educational purposes, by providing synthesized images under specified conditions to help teach trainees how to interpret the medical images.

The CAD model also provides built-in quality assurance, enabling quality checks on predictions by the discriminative prediction algorithm during clinical use, including automated secondary review and real-time validation during imaging. For example, when real ultrasound images are flagged as positive by the discriminative prediction algorithm, the generative model 230 can be used to synthesize similar images conditioned on the actual pathology detected in the real ultrasound images. The synthesized images are then re-evaluated by the discriminative prediction algorithm. When the discriminative prediction algorithm also classifies the synthesized images as positive, it provides confirmation of the original positive diagnosis, further validating the accuracy. Similarly, the generative model 230 may provide secondary confirmation in real-time by generating similar synthesized images in real-time. Predictions on the similar synthesized images by the discriminative prediction algorithm can then be used to refine the original diagnostic result by the discriminative prediction algorithm, creating a feedback loop during live acquisition for active imaging guidance.

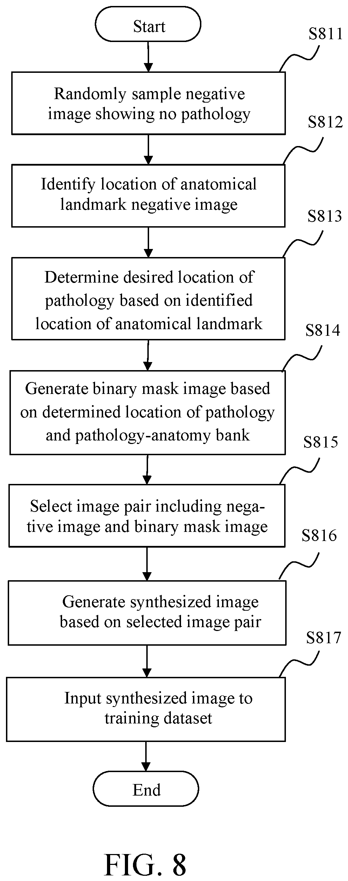

Fig. 8 is a flow diagram of an overall method for synthesizing images containing pathologies for training a discriminative prediction algorithm, according to a representative embodiment. The method may be implemented at least in part using instructions stored in memory 130 and executable by the processing unit 120 in the system 100, for example.

Referring to Fig. 8, a negative image showing no pathology is randomly sampled in block S811. The negative image is randomly sampled from a dataset of negative images, which with an equal probability of being selected. The dataset of negative images may be built from real images of various anatomies images corresponding to the different views/angles, for example. The negative images are acquired using the same imaging modality, such as ultrasound imaging, for which the synthesized images are being generated, such as ultrasound.

In block S812, a location of an anatomical landmark is identified in the negative image. For example, in a negative image of a lung, the anatomical landmark may be the pleural line or the ribs shown in the negative image. The anatomical landmark may be located by bounding box coordinates that are annotated by the user or predicted using a known landmark detection model, for example, as would be apparent to one skilled in the art. The anatomical landmark may be used to constrain pathology placement in the negative image, as discussed below.

In block S813, a desired location is determined for placing a pathology to be simulated in the negative image based on the identified location of the anatomical landmark. The desired location of the pathology to be simulated is determined by sampling the conditional PMF, described above.
The identified location of the anatomical landmark is used as a condition in sampling the conditional PMF during inference (image synthesis) for determining the desired location of the pathology to be simulated in the negative image.

In block S814, a binary mask image is generated based on the identified desired location of the pathology to be simulated and a basic structure of the pathology to be simulated sampled from a pathology-anatomy bank. The binary mask image is scaled to have the same dimension as the negative image, and includes the anatomical landmark and the basic structure of the pathology at the desired location of the pathology to be simulated. That is, the binary mask image may be generated by sampling a relative position between the pathology to be simulated and the anatomical landmark using a conditional PMF to determine the desired location in the binary mask image and conditionally sampling the basic structure of the pathology to be simulated based on the sampled relative position using the pathology-anatomy bank. The sampled basic structure of the pathology from the pathology-anatomy bank is placed at the desired location of the pathology to be simulated, as discussed above with reference to Fig. 3.

In block S815, an image pair is selected. The image pair includes the negative image with an area masked out at the desired location and the binary mask image showing the basic structure of the pathology to be simulated at the same location as the masked out area in the negative image.

In block S816, a synthesized image is generated based on the binary mask and negative image pair. The synthesized image includes the negative image and a synthesized pathology corresponding to the basic structure of the pathology in the binary mask image filling in the masked out pathology area in the negative image.

In block S817, the synthesized image, combined with other synthesized images and real images, is input to a training dataset for training a discriminative predictive algorithm.

According to the embodiments described here, a CAD algorithm integrates a generative AI framework to synthesize realistic images containing pathology, thereby enhancing reliability of the discriminative prediction algorithm by increasing the diversity and prevalence of training data, thereby improving the reliability of downstream discriminative predictive algorithms. Unlike generative AI techniques that rely on fully unconstrained image synthesis, the embodiments use pairs of real positive (pathology) and negative (anatomy) images as conditional inputs to ensure synthesized pathologies have realistic location, size, shape, and structure. Synthesized images are then combined with real images to train discriminative algorithms for automated pathology detection and diagnosis. Further, the generative model is integrated into the CAD algorithm, enabling clinicians to visually assess quality of synthesized images and accuracy of downstream diagnostic predictions by the trained discriminative prediction algorithm. This built-in review mechanism may occur in real-time during live scanning. Synthesized images may be patient-specific basis and could also be used for education and training.

In accordance with various embodiments of the present disclosure, the methods described herein may be implemented using a hardware computer system that executes software programs stored on non-transitory storage mediums. Further, in an exemplary, non-limited embodiment, implementations can include distributed processing, component/object distributed processing, and parallel processing. Virtual computer system processing may implement one or more of the methods or functionalities as described herein, and a processor described herein may be used to support a virtual processing environment.

Although determining user-preferred positions of calipers in ultrasound images has been described with reference to exemplary embodiments, it is understood that the words that have been used are words of description and illustration, rather than words of limitation. Changes may be made within the purview of the appended claims, as presently stated and as amended, without departing from the scope and spirit of the embodiments. Also, although determining user-preferred positions of calipers in ultrasound images has been described with reference to particular means, materials and embodiments, it is not intended to be limited to the particulars disclosed; rather evaluating quality of an ultrasound imaging system extends to all functionally equivalent structures, methods, and uses such as are within the scope of the appended claims.

The illustrations of the embodiments described herein are intended to provide a general understanding of the structure of the various embodiments. The illustrations are not intended to serve as a complete description of all of the elements and features of the disclosure described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The preceding description of the disclosed embodiments is provided to enable any person skilled in the art to practice the concepts described in the present disclosure. As such, the above disclosed subject matter is to be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims and their equivalents and shall not be restricted or limited by the foregoing detailed description.

## Claims

1. A method of synthesizing images containing pathologies for training a discriminative prediction algorithm for performing pathology detection and diagnosis, the method comprising:
randomly sampling a negative image showing no pathology;
identifying a location of an anatomical landmark in the negative image;
determining a desired location for placing a pathology to be simulated in the negative image based on the identified location of the anatomical landmark;
generating a binary mask image based on the desired location of the pathology to be simulated, the binary mask image having the same dimension as the negative image and including a basic structure of the pathology to be simulated at the desired location, wherein generating the binary mask image comprises (i) sampling a relative position between the pathology to be simulated and the anatomical landmark using a conditional probability mass function, PMF, to determine the desired location of the pathology to be simulated in the binary mask image, (ii) conditionally sampling the basic structure of the pathology to be simulated based on the sampled relative position using a pathology-anatomy bank, and (iii) placing the sampled basic structure of the pathology to be simulated at the desired location;
selecting an image pair comprising the negative image with a masked out area at the desired location and the binary mask image showing the basic structure of the pathology to be simulated at the same location as the masked out area in the negative image; and
generating a synthesized image based on the image pair, wherein the synthesized image comprises a synthesized background corresponding to the negative image and a synthesized foreground corresponding to the basic structure of the pathology to be simulated in the binary mask image at the masked out area in the negative image.

2. The method of claim **1,** wherein generating the synthesized image comprises:
encoding the negative image using an encoder of a pre-trained autoencoder to obtain a latent feature map, wherein the latent feature map corresponds to the anatomical landmark in the negative image with the masked out area;
rescaling the binary mask image to the same dimension of the latent feature map;
using the latent feature map and rescaled binary mask image as conditions to a conditional diffusion model to fill in the masked out area in the latent feature map according to the basic structure of the pathology to be simulated given in the binary mask image to output a processed latent feature map; and
decoding the processed latent feature map output by the conditional diffusion model using the decoder of the pre-trained autoencoder to provide the synthesized image.

3. The method of claim 2, wherein:
the autoencoder is pre-trained on a dataset of real clinical images, and
the conditional diffusion model is trained by passing real images through the pre-trained autoencoder to produce down-sampled latent feature maps.

4. The method of claim 2 or 3, further comprising:
randomly sampling real negative images having key anatomical structures; and
creating a combined dataset of real negative images and the synthesized image for training the discriminative prediction algorithm by combining the randomly sampled real negative images and the synthesized image.

5. The method of claim 4, further comprising:
performing test-time augmentation of the combined dataset to alter at least one of size, shape, texture or position of the synthesized pathology in the synthesized image.

6. The method of claim 4 or 5, further comprising:
training the discriminative prediction algorithm using the combined dataset for predicting presence of the pathology in an input image of a patient.

7. The method of claim 6, wherein training the discriminative prediction algorithm is performed concurrently with training the autoencoder and the conditional diffusion model through an iterative training process until convergence.

8. The method of claim 6 or 7, further comprising:
classifying the input image of the patient as positive, with a pathology, using the discriminative prediction algorithm at inference; and
confirming accuracy of the classifying by generating another synthesized image similar to the input image using the conditional diffusion model, inputting the another synthesized image to the discriminative prediction algorithm, and confirming the accuracy of the classifying when the discriminative prediction algorithm classifies the another synthesized image as positive.

9. The method of claim 6 or 7, further comprising:
classifying the input image using the discriminative prediction algorithm at inference to provide a diagnostic result;
generating another synthesized image similar to the input image in real-time;
inputting the another synthesized image to the discriminative prediction algorithm;
classifying the another synthesized image using the discriminative prediction algorithm; and
confirming the diagnostic result based on the classifying of the another synthesized image using the discriminative prediction algorithm.

10. The method of any of claims 1 to 9, wherein the location of the anatomical landmark and the desired location in the negative image are each provided by bounding box coordinates.

11. The method of any of claims 1 to 10, further comprising previously building the anatomy-pathology bank, wherein building the anatomy-pathology bank comprises:
receiving a plurality of pathology-present images showing corresponding pathologies, respectively;
cropping each pathology-present image of the plurality of pathology-present images to a smaller pathology region of interest, ROI, encompassing the corresponding pathology;
extracting the basic structure of the pathology to be simulated by performing on the pathology ROI at least one of (i) binary thresholding to increase contrast of the pathology, (ii) edge detection or edge enhancement to highlight structural boundaries, (iii) feature extraction to identify shape and texture features, or (iv) object detection to extract local feature maps; and
storing the extracted basic structures in the anatomy-pathology bank.

12. A system for synthesizing images containing pathologies for training a discriminative prediction algorithm for performing pathology detection and diagnosis, the system comprising:
a processing unit;
a pathology-anatomy bank storing extracted basic structures of pathologies; and
a non-transitory memory storing instructions that, when executed, cause the processing unit to:
randomly sample a negative image showing no pathology;
identify a location of an anatomical landmark in the negative image;
determine a desired location for placing a pathology to be simulated in the negative image based on the identified location of the anatomical landmark;
generate a binary mask image based on the desired location of the pathology to be simulated, the binary mask image having the same dimension as the negative image and including a basic structure of the pathology to be simulated at the desired location, wherein generating the binary mask image comprises (i) sampling a relative position between the pathology to be simulated and the anatomical landmark using a conditional probability mass function, PMF, to determine the desired location of the pathology to be simulated in the binary mask image, (ii) conditionally sampling the basic structure of the pathology to be simulated based on the sampled relative position using the pathology-anatomy bank, and (iii) placing the sampled basic structure of the pathology to be simulated at the desired location;
select an image pair comprising the negative image with a masked out area at the desired location and the binary mask image showing the basic structure of the pathology to be simulated at the same location as the masked out area in the negative image; and
generate a synthesized image based on the image pair, wherein the synthesized image comprises a synthesized background corresponding to the negative image and a synthesized foreground corresponding to the basic structure of the pathology to be simulated in the binary mask image at the masked out area in the negative image.

13. The system of claim 12, wherein execution of the instructions cause the processing unit to generate the synthesized image by:
encoding the negative image using an encoder of a pre-trained autoencoder to obtain a latent feature map, wherein the latent feature map corresponds to the anatomical landmark in the negative image with the masked out area;
rescaling the binary mask image to the same dimension of the latent feature map;
using the latent feature map and rescaled binary mask image as conditions to a conditional diffusion model to fill in the masked out area in the latent feature map according to the basic structure of the pathology to be simulated given in the binary mask image to output a processed latent feature map; and
decoding the processed latent feature map output by the conditional diffusion model using the decoder of the pre-trained autoencoder to provide the synthesized image.

14. The system of claim 13, wherein:
the autoencoder is pre-trained on a dataset of real clinical images, and
the conditional diffusion model is trained by passing real images through the pre-trained autoencoder to produce down-sampled latent feature maps.

15. A non-transitory computer readable medium storing instructions for synthesizing images containing pathologies for training a discriminative prediction algorithm for performing pathology detection and diagnosis, wherein when executed by a processing unit, the instructions cause the processing unit to:
randomly sample a negative image showing no pathology;
identify a location of an anatomical landmark in the negative image;
determine a desired location for placing a pathology to be simulated in the negative image based on the identified location of the anatomical landmark;
generate a binary mask image based on the desired location of the pathology to be simulated, the binary mask image having the same dimension as the negative image and including a basic structure of the pathology to be simulated at the desired location, wherein generating the binary mask image comprises (i) sampling a relative position between the pathology to be simulated and the anatomical landmark using a conditional probability mass function, PMF, to determine the desired location of the pathology to be simulated in the binary mask image, (ii) conditionally sampling the basic structure of the pathology to be simulated based on the sampled relative position using a pathology-anatomy bank, and (iii) placing the sampled basic structure of the pathology to be simulated at the desired location;
select an image pair comprising the negative image with a masked out area at the desired location and the binary mask image showing the basic structure of the pathology to be simulated at the same location as the masked out area in the negative image; and
generate a synthesized image based on the image pair, wherein the synthesized image comprises a synthesized background corresponding to the negative image and a synthesized foreground corresponding to the basic structure of the pathology to be simulated in the binary mask image at the masked out area in the negative image.
